Europäisches Patentamt

European Patent Office

Office européen des brevets

(11) Veröffentlichungsnummer: **0 099 566**
**B1**

(12) **EUROPÄISCHE PATENTSCHRIFT**

(45) Veröffentlichungstag der Patentschrift: **09.11.88**

(21) Anmeldenummer: **83107040.4**

(22) Anmeldetag: **18.07.83**

(51) Int. Cl.⁴: **H 04 B 3/14**

(54) Regelbarer Entzerrer.

(30) Priorität: **21.07.82 DE 3227239**

(43) Veröffentlichungstag der Anmeldung:
**01.02.84 Patentblatt 84/05**

(45) Bekanntmachung des Hinweises auf die
Patenterteilung:
**09.11.88 Patentblatt 88/45**

(84) Benannte Vertragsstaaten:
**AT CH DE GB IT LI**

(56) Entgegenhaltungen:
**DE-A-2 703 166**
**FR-A-2 225 896**
**US-A-4 078 215**
**US-A-4 166 197**
**WIRELESS WORLD, Band 84, Nr. 1513,
September 1978, Seiten 58-63, Haywards
Heath, GB; M. THOMAS: "Tunable audio
equalizer"**
**NAVY TECHNICAL DISCLOSURE BULLETIN,
Band 2, Nr. 9, September 1977, Seiten 1-6,
Arlington, US; G.E. ENGLISH et al.: "Adaptive
equalization network"**

(73) Patentinhaber: **Siemens Aktiengesellschaft
Berlin und München
Wittelsbacherplatz 2
D-8000 München 2 (DE)**

(72) Erfinder: **Müller, Eugen, Dr.-Ing.
Birgweg 8
D-8021 Hohenschäftlarn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen regelbaren Entzerrer gemäß dem Oberbegriff des Patentanspruches 1.

Entzerrer der vorgenannten Art sind aus der FR—A—2 225 896 bekannt.

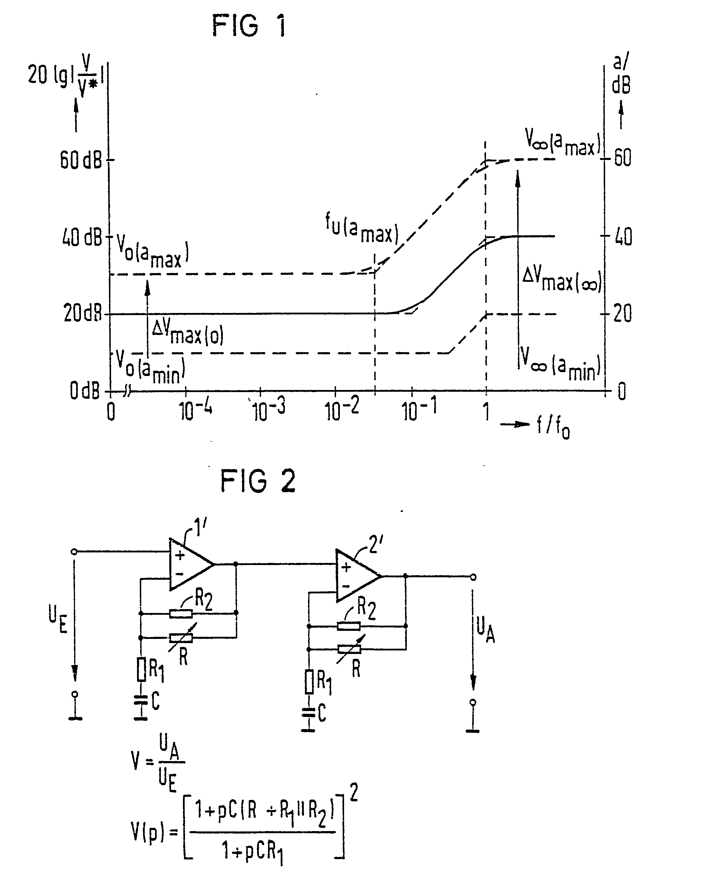

Regelbare Entzerrer sind bekanntlich solche Entzerrer, deren Verstärkungsfaktor durch ein Regelsignal veränderbar ist. Dieses Regelsignal wird in Abhängigkeit von den geforderten Eigenschaften gewonnen und muß von Fall zu Fall den praktischen Bedürfnissen angepaßt werden. Zur Entzerrung des Frequenzganges von Übertragungsleitungen ist eine Entzerrerschaltung erforderlich, die einen zur Dämpfung der Leitung komplementären Frequenzgang aufweist. Dazu muß passend zur aktuellen Leitungsdämpfung, gesteuert durch ein geeignetes Regelkriterium, der Frequenzgang des Entzerrers eingestellt werden. Dieser Frequenzgang wird anhand der Fig. 1 später noch besprochen, ebenso wird anhand der Fig. 2 eine an sich bekannte Schaltung besprochen, die bislang verwendet wurde. Bei dieser bekannte Schaltung tritt aber u.a. die Schwierigkeit auf, daß der Verstärkungsfaktor beispielsweise nur größer bzw. gleich Eins gewählt werden kann, so daß unter Umständen Spannungsteiler erforderlich werden, daß weiterhin die Verstärkungsvariation auch durch andere Schaltungswiderstände beeinflußt und deshalb eine große Variation der regelbaren Widerständ nötig wird und schließlich daß auch eine Veränderung der Grundverstärkung bei der Frequenz $f=0$ nicht einfach durchführbar ist.

Aufgabe der Erfindung ist es, Verstärerschaltungen für regelbare Entzerrer anzugeben, bei denen die vorstehend genannten Schierigkeiten praktisch vermiden sind und bei denen schließlich auch die erforderlichen Widerstandsvariations minimal gehalten werden kann.

Diese Aufgabe wird erfindungsgemäß nach dem kennzeichnenden Teil des Patentanspruchs 1 gelöst.

Nachstehen wird die Erfindung noch näher erläutert.

Es zeigen in der Zeichnung

Fig. 1 wie bereits erwähnt, den an sich bekannten Frequenzgang der Entzerrerverstärkung;

Fig. 2 wie bereits erwähnt, die bekannte Schaltung mit nichtinvertierenden Operationsverstärkerschaltungen in einer zweistufigen Anordnung;

Fig. 3 eine Schaltung mit zwei invertierenden Verstärkerstufen;

Fig. 4 eine weiter Schaltung mit drei Verstärkerstufen.

Wie einleitend bereits erwähnt, ist in Fig. 1 in Abhängigkeit von der normierten Frequenz $f/f_o$ mit $f_o$ als Bezugsfrequenz der Frequenzgang der Entzerrerverstärkung dargestellt. Auf der Abszisse ist die Kabeldämpfung a in dB und ebenso das bekannte logarithmische Verstärkungsmaß $20 \lg |v/v^*|$ aufgetragenen, womit kurz nochmals darauf hingewiesen sei, daß für die Einstellung des Entzerrers Regelsignale entsprechend dieser Kabeldämpfung gewonnen werden müssen. Ferner ist zu erkennen eine veränderbare untere Grenzfrequenz $f_u$ und die Grundverstärkung $v_o$ bei der maximalen ($a_{max}$) und der minimalen ($a_{min}$) Dämpfung. Weiterhin sind erkennbar die Verstärkungsfaktoren $v\infty$ bei maximaler ($a_{max}$) und minimaler ($a_{min}$) Dämpfung. Auch die zugehörigen Differzen sind entsprechend als $\Delta v_{max(o)}$ bzw. $\Delta v_{max(\infty)}$ eingetragen.

Bei bekannten Entzerren nach Fig. 2 wird eine zweistufige Anordnung verwendet, bei der zwei nichtinvertierende Verstärkerstufen in Kette geschaltet sind. Die beiden Verstärkerstufen sind dort mit 1' und 2' bezeichnet, auch ist zu erkennen, daß ihre Kopplung unmittelbar aufeinanderfolgt, so daß also der nichtinvertierende Eingang der Verstärkerstufe 2' direkt am Ausgang der Verstärkerstufe 1' angeschlossen ist. Das Eingangssignal $U_E$ liegt am nichtinvertierenden Eingang der ersten Verstärkerstufe 1', das Ausgangssignal $U_A$ wird vom Ausgang der zweiten Verstärkerstufe 2' abgenommen. Die Verstärkungsfaktoren sind in Fig. 2 ebenfalls angegeben, auch ist in Abhängigkeit von der komplexen Frequenz p formelmäßig der Verstärkungsfaktor dieser Schaltung angegeben. In beiden Verstärkerstufen liegt zwischen deren invertierendem Eingang und Massepotential eine Serienschaltung aus einem Widerstand $R_1$ und einem Kondensator C, weiterhin liegt zwischen dem Ausgang und dem invertierenden Eingang die Parallelschaltung aus einem Festwiderstand $R_2$ und einem variablen Widerstand R.

Bei der Schaltung nach Fig. 2 kann, wie entleitend erwähnt, der Verstärkungsfaktor nur aur Werte eingestellt werden, die gleich oder größer Eins, nicht aber kleiner als Eins, sind, so daß unter Umständen zur Regelanpassung Spannungsteiler erforderlich werden, was mit zusätzlichem Schaltungsaufwand und mit einem Dynamikverlust verbunden ist. Darüber hinaus zeigt die Schaltung nach Fig. 2 noch folgende Eigenschaften. Die Widerstandsvariation für einen vorgegebenen Regelbereich muß groß sein, da nicht ausschließlich der Wert von R, sondern auch der Wert der anderen Beschaltungswiderstände die Verstärkung und die Eckfrequenzen beeinflussen. Beide Anschlüsse des variablen Widerstandes R liegen an Wechselspannungspotential. Eine Veränderung der Grundverstärkung bei der Frequenz $f=0$ ist nicht einfach durchfürbar.

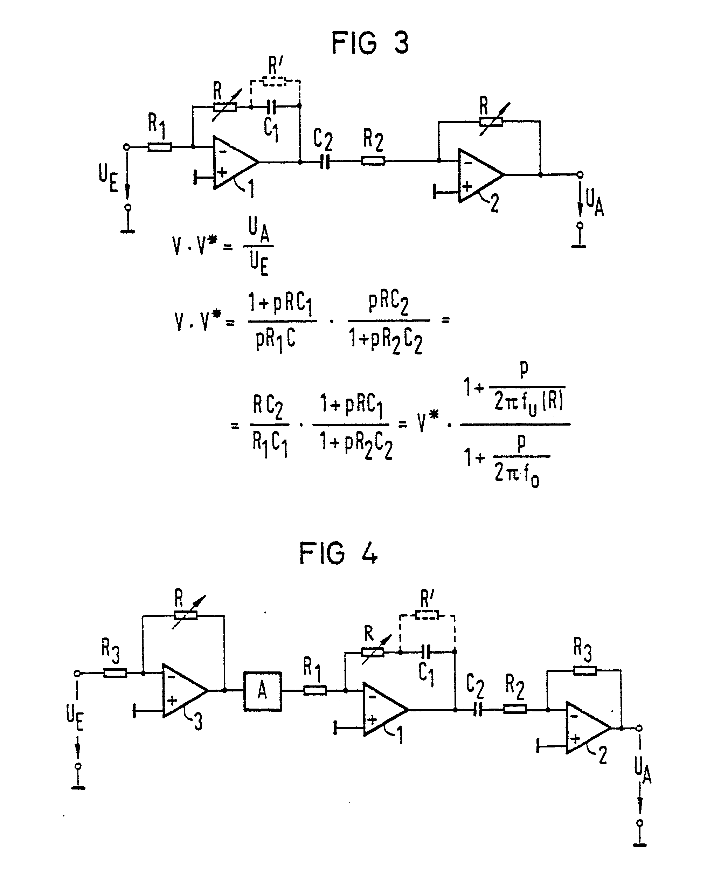

Bei der in Fig. 4 angegebenen Schaltung treten diese Schwierigkeiten nicht mehr auf. Es sind die beiden Verstärkerstufen nur mit 1 und 2 (also ohne Apostrophierung) gekennzeichnet; im Ausführungsbeispiel der Fig. 4 ist eine weitere Verstärkerstufe 3 enthalten.

Die in den Fig. 3 and 4 gezeigten Ausführungsbeispiele haben unter anderem den Vorteil, daß bei einer vorgegebenen geforderten Verstärkungsveränderung die hierfür erforderliche Widerstandsveränderung minimal gehalten werden kann. Auch im Beispiel der Fig. 3 und 4 sind die variablen Widerstände mit R bezeichnet (und in bekannter Weise durch den Pfeil kenntlich gemacht). Im einzelnen ist im Schaltbild der Fig. 3 noch zu erwähnen, daß die beiden Verstärkerstufen 1 und 2 über die Serienschaltung aus einem Kondensator $C_2$ und einen Widerstand $R_2$ verbunden sind, die Ausgangsspannung der Verstärkerstufe 1 wird also über diese Serienkombination auf den invertierenden Eingang der Verstärkerstufe 2 gebracht. Zu erkennen ist ferner, daß die Eingangsspannung $U_E$ über einen Widerstand $R_1$ auf den invertierenden Eingang der Verstärkerstufe 1 gebracht wird, schließlich ist die Verstärkerstufe 1 über eine Serienschaltung aus dem variablen Widerstand R und einem Kondensator $C_1$ gegengekoppelt, d.h. also über diese Serienschaltung sind der Ausgang der Verstärkerstufe 1 und ihr invertierende Eingang verbunden, während der nichtinvertierende Eingang auf Bezugspotential liegt. Dem Kondensator $C_1$ kann gegebenenfalls, wie dies gestrichelt angedeutet ist, ein Widerstand R' parallelgeschaltet sein. In der zweiten Verstärkerstufe 2 sind die Verhältnisse ähnlich, nur erfolgt die Gegenkopplung lediglich über den variablen Widerstand R. Der nichtinvertierende Eingang der zweiten Verstärkerstufe 2 liegt ebenfalls auf Bezugspotential, erkennbar ist auch die Ausgangsspannung $U_A$. Die Verstärkungsfactoren sind in Fig. 2 ebenfalls formelmäßig unmittelbar angegeben.

Wie bereits erwähnt, soll also durch möglichst kleine Veränderung von R der Verstärkungsfaktor V möglichst viel geändert werden. Bei neuren Schaltungstechnologien wird man selbstverständlich anstreben, den Widerstand R in geeigneter Weise integrierbar auszubilden. Auch hierfür sollen also Schaltungen verwendet werden, die auf ein Regelkriterium, wie beispielsweise eine sich ändernde Steuerspannung, ansprechen. Eine stetige Veränderung des Widerstandes R läßt sich beispielsweise durch steuerbare Feldeffekttransistoren erreichen. Weiterhin sind stufige Einstellungen nach Art der an sich bekannten "switched capaciter-Schaltungen" (Schalter-Kondensator-Schaltungen) möglich, bei denen mit Hilfe von Taktvariationen bzw. durch zuschaltbare Kondensatoren Widerstände nachgebildet werden könne. Auch läßt sich an stufig abgreifbare Widerstände denken, an deren einzelne Stufen mit Hilfe von Schaltern herangegangen wird.

Wenn man weiterhin die in Fig. 3 dargestellte Reihenfolge für die Verstärkerstufen 1 und 2 einhält, dann sorgt der Kondensator $C_2$ gleichzeitig für eine gleichstrommäßige Abtrennung der ersten Stufe, so daß die sogenannte, bei Operationsverstärkern auftretende Offsetspannung sich nicht schädlich auf die zweite Stufe auswirken kann.

In Fig. 2 wird also zur Entzerrung des Frequenzganges von Übertragungsleitungen eine Schaltung angegeben, die einen zue Dämpfung der Leitung komplementären Frequenzbang (ggf. zuzüglich einer konstanten Verstärkung V*) aufweist. Dabei muß abhängig von der aktuellen Leitungsdämpfung a, z.B. gesteuert durch die Größe der Signalamplitude, ein Frequenzgang der Entzerrerverstärkung nach Fig. 1 eingestellt werden. Es wird also die Grundverstärkung bei tiefen Frequenzen um bis zu $V_{max(0)}$ und die Verstärkung bei hohen Frequenzen um bis zu

$$V_{max}(\infty) = V_{max}2(0)$$

verändert und bei festgehaltener oberer Grenzfrequenz $f_0$ die untere Grenzfrequenz $f_u$, ausgehend vom Wert $f_0$ für $a_{min}$ umgekehrt proportional dem Wert V(0) abgesenkt werden.

Zur Verstellung der Entzerrerparameter werden zwei gleiche veränderliche Widerstände R vorgesehen, die die geforderten Zusammenhänge zwischen Vo (Verstärkung bei f=0), fu und $V_\infty$ (Verstärkung bei f→∞) herstellen.

Die in Fig. 3 angegebene Entzerreranordnung ermöglicht die Realisierung, bei der die erforderliche Widerstandsänderung minimal wird. Es gilt hier

$$V_o \sim R, \quad V_\infty \sim R^2, \quad f_u = f_o/V_o,$$

so daß sich die erforderliche Widerstandsänderung wie folgt berechnen läßt

$$r = \frac{R_{max}}{R_{min}} = \Delta V_o = \sqrt{V_\infty}.$$

Für den praktischen Betrieb ist der Widerstand $R' \gg R_{max}$ parallel zu $C_1$ vorzusehen, der eine Gleichstromgegenkopplung des ersten Operationsverstärkers ermöglicht.

Die Vorzüge der Schaltung nach Fig. 3 gegenüber der Schaltungen nach Fig. 2 sin u.a. im folgenden zu sehen.

Beivorgegebenem Widerstandsverhältnis r ergibt sich hier ein vergrößerter Regelbereich. Wegen der geringern erforderlichen Variation sind und den oft nicht linearen differentiellen Widerständen hier größere Amplituden zulässig bzw. es treten hier nur geringere nichtlineare Verzerrungen auf. Zur Erfüllung eines vorgegebenen Wertes von $V_0$ mit dem zugehörigen Frequenzgang nach Bild 1 ist hier nur die theoretisch minimal mögliche Widerstandsänderung r erforderlich. Der Wert der Grundverstärkung V* kann in weiten Grenzen frei gewählt werden (V*>0).

Die in Fig. 4 gezeigte Schaltung ist eine Modifikation der Entzerrerschaltung nach Fig. 3 zur Dynamikreduktion im Schaltungsteil A. Auch bei dieser Schaltung sind die Verstärkerstufen 1 und 2 erkennbar, allerdings liegt einer der veränderlichen Widerstände R nun in der Verstärkerstufe 1, während in der Verstärkerstufe 2 ein Festwiderstand $R_3$ verwendet wird. Der zweite veränderbare Widerstand R liegt in der Verstärkerstufe 3, die über eine Signalvorverarbeitungsschaltung A an die Verstärkerstufe 1 angeschaltet ist. Die Eingangsspannung $U_E$ wird über einen Widerstand $R_3$ dem invertierenden Eingang der Verstärkerstufe 3 zugeführt. Die Signalvorverarbeitungsschaltung A kann beispielsweise eine soge- nannte sample and hold-(Abtast-Halte-Schaltung)-Schaltung sein oder auch eine Filterschaltung, wie beispielsweise ein Tiefpaß.

Ein variabler Widerstand R wird also, wie in Fig. 4 dargestellt, vorgezogen, um einen Schaltungsteil A mit reduzierten Dynamikforderungen betreiben zu können. Auch für die Schaltung nach Fig. 4 gilt: Die Variation der Widerstände R kann durch stetige Verstellung (z.B. Dioden, FET) oder durch stufige Umschaltung (z.B. Digital/Analog-Wandler, geschaltete Kondensatoren, Widerstandsnetzwerk) erfolgen. Im letzteren Fall werden die Widerstände zweckmäßigerweise in logarithmisch gleichgroßen Schritten verändert, wobei eine Hysterese bei der Umschaltung vorzusehen ist.

**Patentansprüche**

1. Regelbarer Entzerrer zur Entzerrung des Frequenzganges von Übertragungsleitungen unter Verwendung von drei je für sich gegengekoppelten Verstärkerstufen (3, 1, 2), insbesondere Operationsverstärkerstufen, die als invertierende Verstärker ausgebildet sind und deren Verstärkungseinstellung durch veränderliche Widerstände (R) in der ersten und zweiten Verstärkerstufe (3, 1) und über ein Festwiderstand ($R_3$) in der dritten Verstärkerstufe (2) erfolgt, dadurch gekennzeichnet, daß die Kopplung von der ersten Stufe (3) zur zweiten Stufe (1) über eine Signal-Vorverarbeitungsschaltung (A) erfolgt und dabei die Gegenkopplung in der zweiten Stufe (1) aus der Serienschaltung eines veränderbaren Widerstandes (R) und eines Kondensators ($C_1$) besteht, dem gegebenenfalls ein Widerstand (R') parallel geschaltet ist, und schließlich zwischen der zweiten Stufe (1) und der dritten Stufe (2) die Serienschaltung aus einem Kondensator (C2) und einem Widerstand ($R_2$) liegt.

2. Regelbarer Entzerrer nach Anspruch 1, dadurch gekennzeichnet, daß der veränderbare Widerstand (R) durch integrierbare Schaltungen, wie beispielsweise durch steuerbare Feldzffekttransistoren oder Schalter-Kondensator-Schaltungen (SC=switched capacitor-Schaltungen) nachgebildet ist.

**Revendications**

1. Egaliseur réglable servant à corriger les distorsions de la réponse en fréquence de lignes de transmission moyennant l'utilisation de trois étages amplificateurs (3, 1, 2) couplés chacun par contre-réaction, notamment des étages amplificateurs opérationnels, qui sont réalisés sous la forme d'amplificateurs inverseurs et dont le réglage de l'amplification est réalisé par l'intermédiaire de résistances variables (R) dans les premier et second étages amplificateurs (3, 1) et par l'intermédiaire d'une résistance fixe ($R_3$) dans le troisième étage amplificateur (2), caractérisé par le fait que le couplage entre le premier étage (3) et le second étage (1) est réalisé par l'intermédiaire d'un circuit (A) de traitement préalable des signaux et que la contre-réaction dans le second étage (1) est constituée par le circuit série formé d'une résistance variable (R) et d'un condensateur ($C_1$), en parallèle avec lequel est éventuellement branchée une résistance (R'), et qu'enfin le circuit série formé d'un condensateur ($C_2$) et d'une résistance ($R_2$) est disposé entre le second étage (1) et le troisième étage (2).

2. Egaliseur réglable suivant la revendication 1, caractérisé par le fait que la résistance variable (R) est simulée par des circuits intégrés, comme par exemple par des transistors à effet de champ ou par des transistors à effet de champ commandables ou par des circuits commandables ou par des circuits commandables à condensateurs commutés (SC=circuits switched capacitor).

**Claims**

1. An adjustable equaliser for equalising the frequency response of transmission lines, using three amplifier stages (3, 1, 2), in particular operational amplifier stages, each provided with independent negative feedback, which are designed as inverting amplifiers and whose amplification is adjusted by means of variable impedances (R) in the first and second amplifier stages (3, 1) and via a fixed impedance ($R_3$) in the third amplifier stage (2), characterised in that the coupling from the first stage (3) to the second stage (1) takes place via a signal pre-processing circuit (A), where the negative feedback in the second stage (1) consists of the series arrangement of a variable impedance (R) and a capacitor ($C_1$) to which an impedance (R') is connected in parallel where appropriate, and finally the series arrangement of a capacitor ($C_2$) and an impedance ($R_2$) is connected between the second stage (1) and the third stage (2).

2. An adjustable equaliser as claimed in Claim 1, characterised in that the variable impedance (R) is simulated by integratable circuits, such as for example by controllable field-effect transistors or switched capacitor circuits.

# FIG 1

# FIG 2

$$V = \frac{U_A}{U_E}$$

$$V(p) = \left[ \frac{1 + pC(R + R_1 \| R_2)}{1 + pCR_1} \right]^2$$

# FIG 3

$$V \cdot V^* = \frac{U_A}{U_E}$$

$$V \cdot V^* = \frac{1+pRC_1}{pR_1C} \cdot \frac{pRC_2}{1+pR_2C_2} =$$

$$= \frac{RC_2}{R_1C_1} \cdot \frac{1+pRC_1}{1+pR_2C_2} = V^* \cdot \frac{1+\dfrac{p}{2\pi f_U(R)}}{1+\dfrac{p}{2\pi f_0}}$$

# FIG 4